# FASCICULE DE BREVET EUROPEEN

(11) **EP 0 549 499 B1**
(45) Date de publication et mention de la délivrance du brevet: **27.03.1996**
(21) Numéro de dépôt: 92420485.2
(22) Date de dépôt: 28.12.1992
(51) Int. Cl.: B32B 3/12, E04C 2/34

(54) **Dispositif pour réaliser des planchers ou autres panneaux du type sandwich et éléments utilisés pour leur construction**
Vorrichtung zum Herstellen von Böden oder verschiedener Sandwichplatten und verwendete Elemente zu deren Herstellung
Means for producing floors or other sandwich panels and elements used for their construction

(30) Priorité: 26.12.1991 FR 9116438
(43) Date de publication de la demande: 30.06.1993
(73) Titulaire: Poincelet, Lucien, F-69160 Tassin-la-Demi-Lune (FR)
(72) Inventeur: Poincelet, Lucien, F-69160 Tassin-la-Demi-Lune (FR)

(56) Documents cités:
- EP-A- 0 230 389
- BE-A- 498 839
- GB-A- 601 674
- US-A- 3 876 492
- US-A- 4 348 442
- US-A- 4 495 237

## Description

La présente invention, permet de réaliser facilement sur site ou préfabriquées, des structures cohérentes, utilisables comme planchers, autres surfaces portantes ou parois, de toutes dimensions, en utilisant des composants élémentaires légers, facilement stockables et transportables, assemblés entre eux.

On sait que pour l'obtention de telles structures, on a proposé des panneaux du type sandwich qui comprennent, maintenues entre deux plaques parallèles, deux séries de bossages ou corps à profit conique ou pyramidal qui sont orientées tête-bêche l'une par rapport à l'autre, de façon que les bossages de l'une viennent s'insérer en vis à vis entre les bossages de l'autre.

La présente invention consiste à ce qu'entre deux plaques parallèles, deux séries de corps rigides à profits tronconiques sont maintenus orientés tète-bêche l'une par rapport à l'autre, de façon à ce que les corps tronconiques, disposés en quinconce de l'une viennent s'insérer entre les corps tronconiques disposés en quinconce de l'autre, de sorte que chaque corps tronconique du système s'appuie sur une génératrice de chacun des trois corps tronconiques de la série opposée en vis à vis.

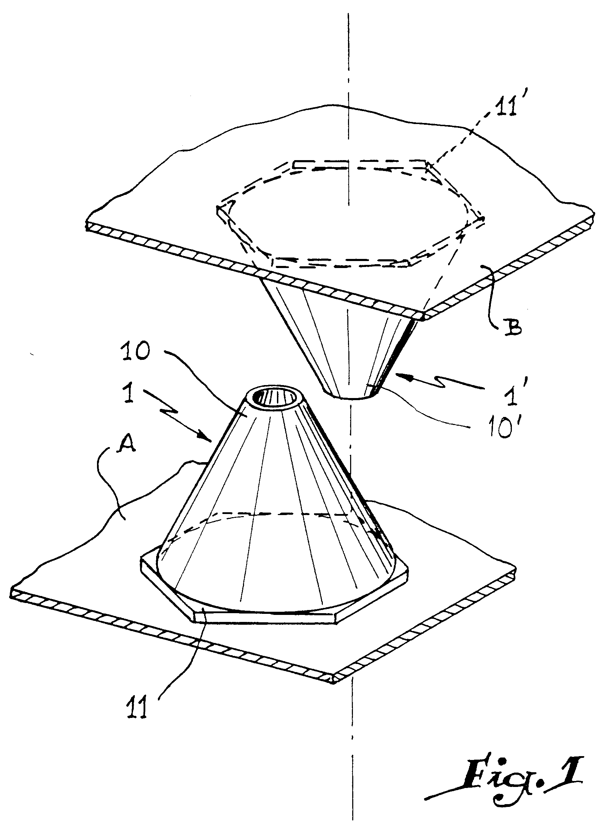

Elle est caractérisée par la conception de ses éléments modulaires qui leur assure un positionnement précis dans le dispositif. La liaison des corps entre eux et les plaques extérieures, est assurée par les génératrices en contact et les grandes bases, non par les petites bases qui restent libres, et se réservent un petit espace par rapport au plan opposé en vis à vis, ceci, tout en favorisant l'élasticité, crée une structure tridimensionnelle à "base triangulaire" (dont les axes des corps à profits tronconiques passent par les sommets d'un triangle équilatéral représenté hachuré sur fig.2) Le système ainsi obtenu présente l'avantage que l'élément de charge appliqué sur la grande base d'un corps tronconique se décompose en trois forces à 120°, qui se répartissent sur les trois corps tronconiques entre lesquels il est inséré, par l'intermédiaire de leurs seules génératrices en contact. La somme des trois forces à 120° résultante est annulée par les forces de réaction qui leurs sont directement opposées par les autres corps tronconiques leurs faisant vis à vis, la charge se trouve naturellement transmise sur la périphérie et sur la totalité de la base des trois corps tronconiques, opposés, sollicités. Il s'en suit la fatigue normale rendu possible pour le corps tronconique sollicité et par voie de conséquence, une plus grande souplesse du dispositif. A la différence des systèmes proposés par les documents GB-A-601 674 et US A-4-495 237 qui sont à base carrée (bossages intérieurs à profit pyramidal) et dont les forces sont transmises vers les appuis suivant deux directions perpendiculaires.

Un dispositif, connu du document US A-4-434 8442 consiste en des tétraèdres tronqués à têtes plates et fermées, imbriqués qui portent sur les cotés méplats des trois tétraèdres inverses placés en vis à vis, les têtes plates s'appuient sur la plaque opposée. Les efforts ne sont pas transmis par leurs seuls cotés méplats, mais aussi par les têtes plates, ce fait empêche de réaliser le système à répartition tridimensionnelle, décrit dans la présente invention, et génère des contraintes parasitaires au niveau des têtes plates.

La forme tronconique des corps rigides, choisie selon l'invention, de préférence ouverte à sa petite base, répartit au mieux les fatigues à l'intérieur de la matière constituant ceux-ci selon la théorie des coques. Cependant, cette forme, peut avoir une base polygonale dont le nombre de coté est multiple de six.

Dans le document BE-A-498-839 les éléments d'espacement sont fixés sur les plaques leurs faisant vis à vis, par leurs extrémités opposées uniquement et non par leurs génératrices qui ne sont pas mises à profit, pour transmettre les efforts qu'ils reçoivent, ceux-ci se trouvent alors directement amenés au plan qui lui est opposé. De plus, les éléments sont implantés sur une base carrée.

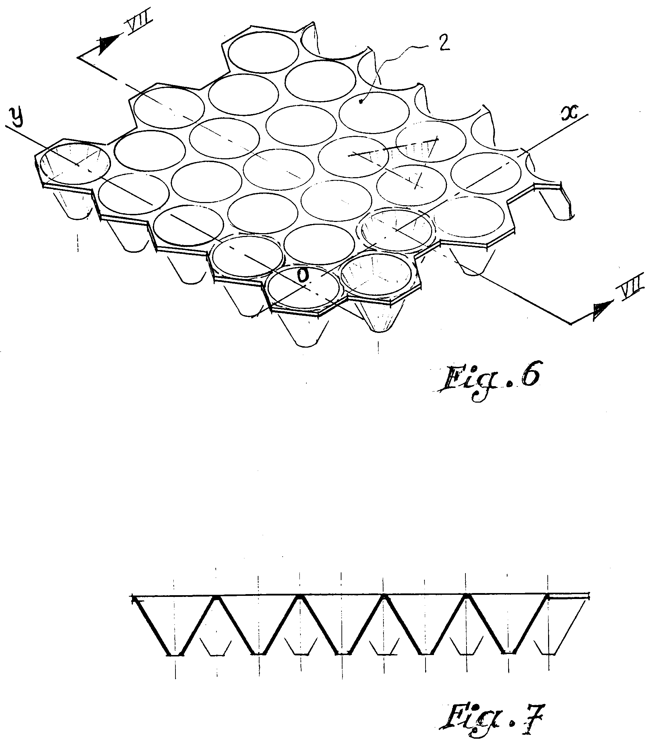

Pour rendre possible l'exécution du dispositif selon l'invention, on distingue deux types d'éléments modulaires qui se complémentent naturellement, l'un du type I adapté à la construction des surfaces à grandes capacités portantes (immobilier : ponts, planchers de bâtiments), l'autre du type II adapté à la réalisation de surfaces à petites capacités portantes (mobilier : stockages, estrades, parois...).
La présente invention concerne donc, un premier élément modulaire caractérisé en ce qu'il est constitué d'un corps à profit tronconique dont la grande base comporte une embase de forme hexagonale, telle que le cercle inscrit qui définit son pourtour coïncide avec le cercle définit par l'extérieur de la grande base du corps tronconique. Un deuxième élément modulaire caractérisé en ce qu'il est constitué d'un ensemble de plusieurs corps à profil tronconique réunis soit pré assemblés sur une embase commune, soit obtenu d'un seul tenant par moulage ou autres procédés, le contour de cette embase présentant des découpes en créneaux (suivant ox fig.6) et en dents de scie (suivant oy fig.6), chaque créneaux ou dents de scie est une partie de base hexagonale dont le cercle inscrit qui définit le pourtour de chacun d'eux coïncide au cercle définit par l'extérieur de la grande base du corps tronconique auquel il se rapporte.

Les dessins annexés, donnés à titre d'exemple, permettront de mieux comprendre l'invention, les caractéristiques qu'elle présente et les avantages qu'elle est susceptible de procurer :
La fig. 1 est une vue en perspective montrant deux éléments modulaires du type I suivant l'invention, orientés tête-bêche en vue de la réalisation d'un panneau sandwich.
La fig. 2 est une vue en plan avec arrachements, illustrant la disposition des éléments modulaires du type I des deux séries dans un panneau fini.
Les fig. 3 et 4 sont des coupes schématiques suivant les plans indiqués en III - III, respectivement IV - IV, en fig. 2, chacune de ces figures faisant apparaître dans sa partie supérieure les éléments du type I des deux séries prêts à être emboîtés, dans sa partie inférieure, ces mêmes éléments une fois emboîtés.
La fig. 5 est une coupe analogue à celle de la fig.4, illustrant la réalisation de surface portante à profil courbe.
La fig. 6 est une vue en perspective montrant l'élément modulaire du type II suivant l'invention.
La fig. 7 est une coupe suivant le plan indiqué VII - VII sur la fig. 6.

L'élément modulaire du type I (réf. 1 sur fig. 1) est essentiellement constitué par un bossage ou corps rigide 10 à profit tronconique dont la grande base se raccorde à une embase 11 à profil hexagonal; il est ici essentiel d'observer que le cercle formé par la grande base précitée s'inscrit dans le cercle inscrit qui définit le pourtour de l'embase 11.

Le mode de solidarisation de cette embase 11 avec le corps 10 peut être absolument quelconque.Il peut s'agir en fait soit de deux pièces assemblées l'une à l'autre, soit d'un seul bloc obtenu par usinage, par estampage, par moulage... il en va de même pour la nature du matériau qui forme chaque élément 1 (bois, métal, matière synthétique, etc....) le choix de la matière dépendant, en fait, de l'usage particulier prévu pour les panneaux sandwich à réaliser.

On conçoit que l'on peut aisément disposer une série de tels éléments 1 sur une plaque telle que celle indiquée en A. Ces éléments viennent se mettre en contact jointif les uns avec les autres, rangée par rangée, les embases 11 assurant une répartition parfaitement régulière. Les rangées longitudinales d'éléments 1 sont automatiquement placées en une position telle que les dits éléments 1 se trouvent situés en quinconce, à la façon illustrée en fig. 2.
On insère entre les éléments modulaires 1 ainsi disposés sur la plaque A, les éléments modulaires 1'.

Le centrage obtenu grâce aux embases hexagonales 11 et 11' est tellement exact que chacun des corps tronconiques 10' vient porter par trois génératrices (indiquées f sur fig. 2) contre l'une des génératrices des trois corps 11 contigus. La hauteur des corps tronconiques est calculée de sorte que I leurs petites bases ne viennent pas prendre appui sur le plan leur faisant vis à vis (indiqué e sur fig.3-4 et 5), ceci pour assurer le bon fonctionnement en souplesse du système et le contact parfait des génératrices.

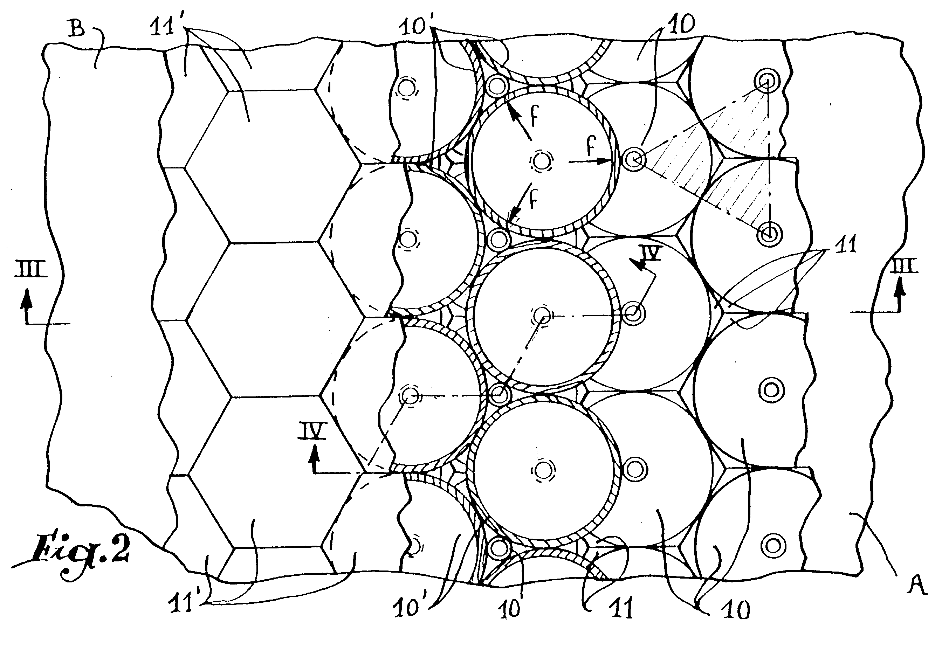

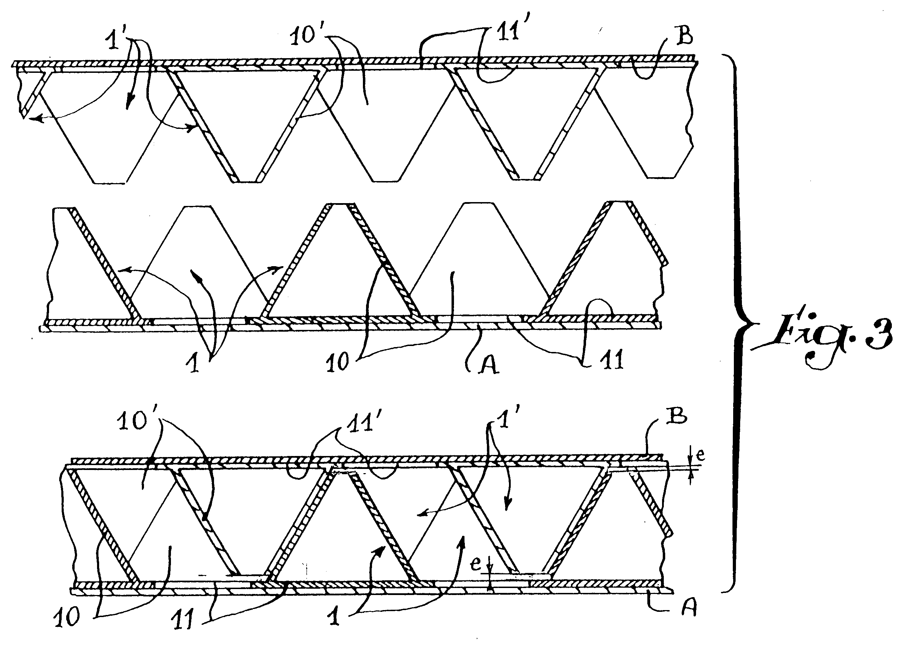

La plaque B vient ensuite fermer l'ensemble. Cet ordre de montage est indicatif pour montage sur site, pour préfabriquer, on opérera pour la plaque B de même que pour la plaque A, les deux ensembles sont alors susceptibles d'être amenés en surperposition en les décalant horizontalement l'un par rapport à l'autre, comme illustré en fig. 3 et 4.

Les plaques A et B sont constituées d'autant d'éléments que l'exigent les surfaces et charges considérées, elles pourront même se présenter en couches superposées, décalées sur le plan horizontal de manière à couvrir les joints d'une couche par l'autre la superposant afin d'obtenir des plaques A et B monolithiques.

L'élément modulaire du type II (réf. 2 sur fig. 6) est essentiellement constitué par plusieurs corps rigides tronconiques dont les axes, implantés de sorte à passer par les sommets d'un triangle équilatéral (représenté hachuré sur fig. 6),sont réunis soit pré assemblés sur une embase commune, soit obtenu d'un seul tenant par moulage ou autre procédés, le contour de cette embase présentant des découpes en créneaux ( suivant ox fig.6 ) et en dents de scie (suivant oy fig.6 ), chaque créneaux ou dents de scie est une partie de base hexagonale dont te cercle inscrit qui définit le pourtour de chacun d'eux coïncide au cercle définit par l'extérieur de la grande base du corps tronconique auquel il se rapporte; permettant leur parfait positionnement lorsqu'ils seront disposés tes uns à coté des autres à la manière d'un puzzle.

Cette formule apporte une simplification dans la fabrication de panneaux ou parois entièrement préfabriqués qui dans ce cas n'à pas à tenir compte du découpage de la périphérie, mais son utilisation permet le montage sur place de panneaux sur mesure ou de forme hémisphérique et sphérique par extension (ex. : réservoir de stockage).

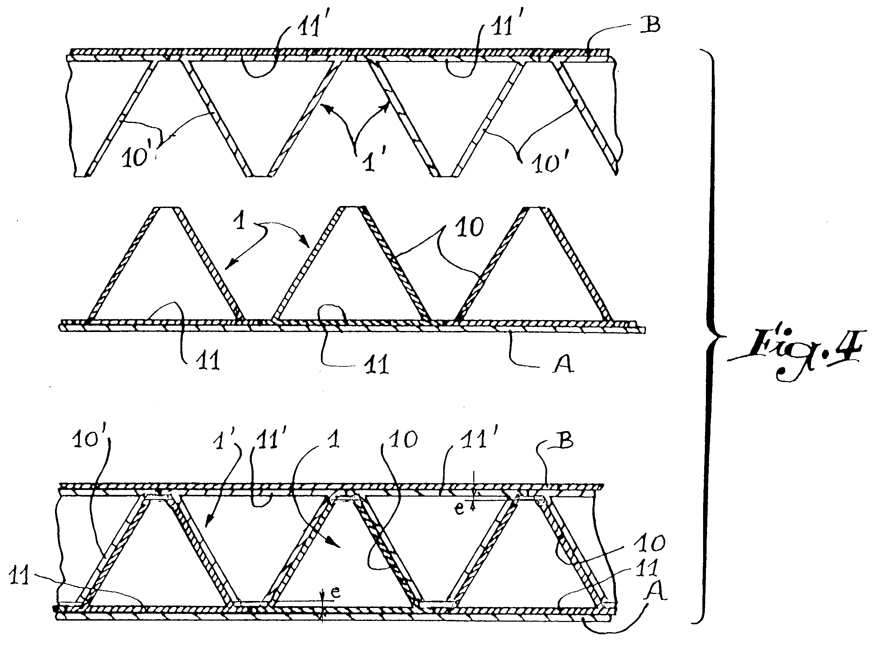

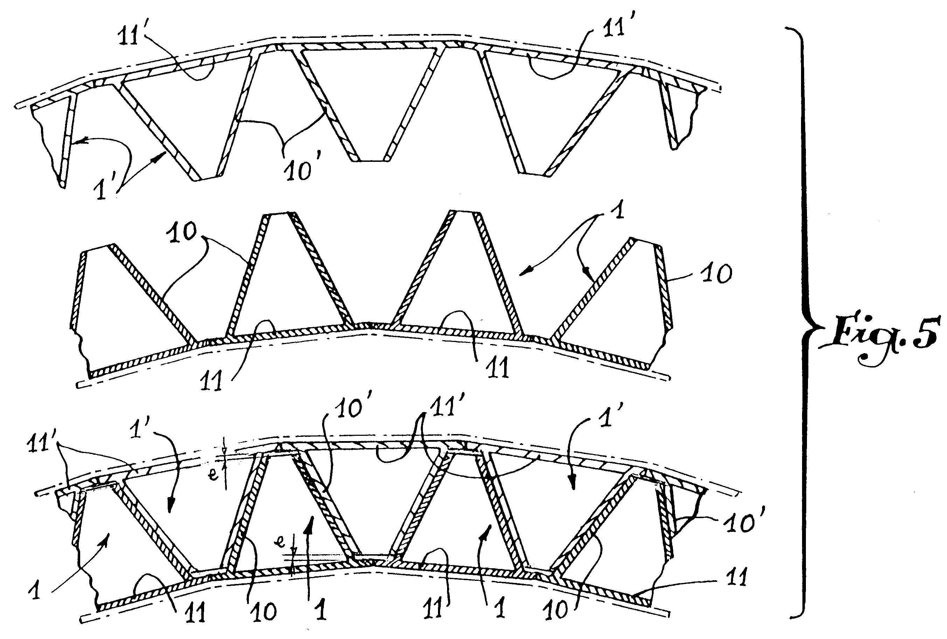

De même tes éléments modulaires du type I sont susceptibles d'être mis en oeuvre pour la réalisation de planchers, panneaux ou parois à profit hémisphérique ou sphérique comme illustré en fig. 5, il suffit à cet effet d'avoir recours pour la constitution des deux série opposées, à des éléments 1 et 1' présentant des angles de conicité différents (technique également valable pour éléments du type II).

La liaison des éléments modulaires entre eux et les plaques extérieures, est assurée par collage ou tous autres moyens mécaniques, ceci dépendant d'une part, de la nature des matériaux choisis adaptés au problème posé, d'autre part, du choix de Idémontabilité ou non de la construction.

Il doit d'ailleurs être entendu que la description qui précède n'a été donnée qu'a titre d'exemple et qu'elle ne limite nullement le domaine de l'invention dont on ne sortirait pas en remplaçant les détails d'exécutions décrits par tous autres équivalents. Il va de soi que l'invention couvre en outre les planchers et autres panneaux réalisés à l'aide des éléments modulaires ci-dessus décrits.

## Revendications

1. Eléments modulaires, utilisables disposés tête-bêche imbriqués et insérés entre deux plaques parallèles (A.B.), pour réaliser des planchers, ponts, parois ou autres panneaux du type sandwich, caractérisé en ce qu'ils sont constitués d'un corps à profil tronconique dont la grande base comporte une embase (11) de forme hexagonale telle que le cercle inscrit qui définit son pourtour coincide avec le cercle (10) définit par l'extérieur de la grande base du corps tronconique.

2. Eléments modulaires, utilisables disposés tête-bêche imbriqués et insérés entre deux plaques parallèles (A.B.), pour réaliser des planchers, ponts, parois ou autres panneaux du type sandwich, caractérisé en ce qu'ils sont constitués d'un ensemble de plusieurs corps à profil tronconique réunis soit pré assemblés sur une embase commune, soit obtenu d'un seul tenant, par moulage ou autres procédés, le contour de cette embase présentant des découpes en crénaux (suivant ox. fig.6) et en dents de scie (suivant oy. fig.6), chaque crénau ou dent de scie est une partie de base hexagonale dont le cercle inscrit qui définit le pourtour de chacun d'eux coincide au cercle définit par l'extérieur de la grande base du corps tronconique auquel il se rapporte.

3. Elément modulaire selon revendication 1, caractérisé en ce que l'embase hexagonale est rapportée et présente une ouverture en son centre.

4. Elément modulaire selon revendication 1, caractérisé en ce que l'embase hexagonale est obtenue d'un seul tenant avec le corps à profit tronconique par moulage, estampage, usinage... ou autres procédés.

5. Elément modulaire selon revendication 1 à 4 , caractérisé en ce que le corps à profil tronconique à une base polygonale dont le nombre de cotés est multiple de 6.

6. Elément modulaire selon l'une quelconque des revendications précédentes caractérisé en ce que les petites bases des corps à profit tronconique sont fermées transversalement.

7. Dispositif pour réaliser des planchers, ponts, parois ou autres panneaux du type sandwich, obtenu en employant des éléments modulaires selon l'une des revendications 1 à 6, qui, diposés tête-bêche, s'insèrent les uns entre les autres, chacun de ceux-ci s'appuyant sur une génératrice des trois corps tronconiques qui leurs sont opposés, caractérisé en ce qu'ils sont maintenus entre eux et les plaques extérieures, par leurs grandes bases et leurs génératrices en contact, non par leurs petites bases qui se réservent un espace tes éloignant suffisamment du plan opposé en vis à vis, pour éviter qu'ils ne se touchent et pour assurer le contact parfait des génératrices

8. Planchers, ponts, parois, ou autres panneaux du type sandwich, caractérisés en ce qu'ils sont réalisés à l'aide d'éléments modulaires selon revendications 1 à 6.

9. Planchers, ponts, panneaux ou autres parois en forme de portion d'hémisphère, d'hémisphère, ou de sphère, caractérisés en ce qu'il sont réalisés à l'aide d'éléments modulaires selon revendications 1 à 6, disposés en deux séries opposées, les deux séries d'éléments opposées présentant des angles de conicité différents.

## Claims

1. Modular units utilizable arranged overlapped side by side head to tail and inserted between two parallel plates (A.B.) to produce floors, bridge, partitions or other panels of the sandwich type, characterised by a body with truncated cone profile whose large base includes a hexagonal shaped seating (11) so that the inscribed circle which defines its circumference coincides with the circle (10) defined by the exterior of the large base of the truncated cone.

2. Modular units utilizable arranged overlapped side by side head to tail and inserted between two parallel plates (A.B.) to produce floors, bridge, partitions or other panels of the sandwich type, characterised by several bodies with truncated cone profiles joined either pre-assembled on a common seating, or obtained from a single body holding, by moulding or other processes, the contour of this seating presenting cut out notches (as per ox. fig. 6) and serrated (as per oy fig. 6), each notch or serration is a part of the hexagonal base whose inscribed circle defining the circumference of each of them coincides with the circle defined by the exterior of the large base of the truncated cone to which it is mounted.

3. A modular unit in accordance with Claim 1, characterised by an added hexagonal seating with an opening at its centre.

4. A modular unit in accordance with Claim 1, characterised by the hexagonal seating being obtained from a single fixing to the truncated cone profile by moulding, die stamping, machining etc. or other processes.

5. A modular unit in accordance with Claims 1 to 4, characterised by a truncated cone body with polygonal base of which the number of sides is a multiple of 6 (six).

6. A modular unit in accordance with any whatsoever of the preceding Claims characterised by the small bases of the bodies with truncated cone profiles being closed transversally.

7. A device to produce floors, bridges, partitions or other panels of the sandwich type, obtained by employing the modular units in accordance with Claims 1 to 6, which, arranged side by side head to tail, are interlocked, each of the former being supported by a generator of three truncated cone bodies to which they are opposed, characterised by being held to each other and to the exterior plates by their large bases and generators in contact and not by their small bases which maintain a space distancing them sufficiently from the opposite opposing surface, to prevent them touching and to ensure the complete contact of the generators.

8. Floors, bridge, partitions or other panels of the sandwich type, characterised by being produced from the modular units defined in Claims 1 to 6.

9. Floors, bridge, panels or other partitions in the form of a part hemisphere, hemisphere or sphere, characterised by being produced from the modular units defined in Claims 1 to 6 arranged in two opposing series, and the units of each series presenting different angles of conicity (fig. 5).

## Patentansprüche

1. Modulare Elemente, verwendbar in gegengleicher Anordnung, ineinandergefügt und zwischen zwei parallelen Platten (A.B.) verlegt, zur Realisierung von Böden, Brücken, Wänden oder anderen verbundartigen Platten, gekennzeichnet dadurch, daß sie aus einem Körper mit kegelstumpfförmigem Profil bestehen, dessen größere Grundfläche eine sechseckige Ansatzfläche (11) enthält, deren umschreibender Kreis mit dem vom Äußeren der größeren Grundfläche des kegelstumpfartigen Körpers gebildeten Kreis (10) deckungsgleich ist.

2. Modulare Elemente, verwendbar in gegenbleicher Anordnung, ineinandergefügt und zwischen zwei parallelen Platten (A.B.) verlegt, zur Realisierung von Böden, Brücken, Wänden oder anderen verbundartigen Platten, gekennzeichnet dadurch, daß sie aus einem Satz mehrerer Körper mit kegelstumpfförmigem Profit bestehen, welche entweder vorverbunden auf einer gemeinsamen Ansatzfläche vereinigt oder durch Formarbeit oder andere Verfahren aus einem einzigen Stück hergestellt wurden, wobei der Umriß dieser Ansatzfläche zinnenförmige (siehe ox. Fig. 6) und sägezahnförmige (siehe oy. Fig. 6) Aussparungen aufweist und jede Zinne oder jeder Sägezahn ein Teil der sechseckigen Grundfläche ist, deren umschreibender Kreis je mit dem vom Äußeren der Grundfläche des kegelstumfartigen Körpers, zu dem er gehört, gebildeten Kreis deckungsgleich ist.

3. Modulares Element gemäß Anspruch 1, gekennzeichnet dadurch, daß die sechseckige Ansatzfläche angebaut ist und in ihrem Zentrum eine Öffnung aufweist.

4. Modulares Element gemäß Anspruch 1, gekennzeichnet dadurch, daß die sechseckige Ansatzfläche durch Formarbeit, Preßtechnik, maschinelle Bearbeitung oder andere Verfahren in einem Stück hergestellt wird.

5. Modulares Element gemäß Anspruch 1 bis 4, gekennzeichnet dadurch, daß der Körper mit kegelstumpfförmigem Profil eine polygonale Basis besitzt, deren Seitenanzahl ein Vielfaches von 6 ist.

6. Modulares Element gemäß jedem beliebigen der obigen Ansprüche, gekennzeichnet dadurch, daß die kleineren Grundflächen der kegelstumpfförmigen Körper quer verschlossen sind.

7. Vorrichtung zur Realisierung von Böden, Brücken, Wänden oder anderen verbundartigen Platten, hergestellt unter Verwendung der modularen Elemente gemäß einem der Ansprüche 1 bis 6, die sich gegengleich angeordnet ineinander einfügen, wobei sich jedes von ihnen auf eine Mantellinie der drei ihnen gegenüberliegenden kegelstumpfförmigen Körper stützt, gekennzeichnet dadurch, daß sie untereinander und mit den äußeren Platten durch ihre größeren Grundflächen und ihre in Berührung stehenden Mantellinien festgehalten werden, und nicht durch ihre kleineren Grundflächen, für die ein Raum freigehalten wird, durch den sie von der gegenüberliegenden Ebene ausreichend entfernt werden, damit eine Berührung zwischen ihnen vermieden und ein perfekter Kontakt der Mantellinien gewährleistet wird.

8. Böden, Brücken, Wände oder andere verbundartige Platten, gekennzeichnet dadurch, daß sie mit Hilfe modularer Elemente gemäß den Ansprüchen 1 bis 6 realisiert werden.

9. Böden, Brücken, Platten oder andere Wände in Form eines Halbkugelabschnitts, einer Halbkugel oder Kugel, gekennzeichnet dadurch, daß sie mit Hilfe von modularen Elementen gemäß den Ansprüchen 1 bis 6 realisiert werden, welche in zwei gegenüberliegenden Serien angeordnet werden, wobei die Elemente jeder Serie verschiedene Kegelwinkel aufweisen (Fig. 5).
